# EUROPÄISCHE PATENTSCHRIFT

(11) **EP 4 116 788 B1**
(45) Veröffentlichungstag und Bekanntmachung des Hinweises auf die Patenterteilung: **28.08.2024**
(21) Anmeldenummer: 21184654.8
(22) Anmeldetag: 09.07.2021
(51) Int. Cl.: G05D 1/00

(54) **SICH SELBSTTÄTIG FORTBEWEGENDES BODENBEARBEITUNGSGERÄT**
AUTOMATIC SOIL PREPARATION EQUIPMENT
APPAREIL DE TRAITEMENT DU SOL AUTONOME

(43) Veröffentlichungstag der Anmeldung: 11.01.2023
(73) Patentinhaber: Vorwerk & Co. Interholding GmbH, 42275 Wuppertal (DE)
(72) Erfinder: Bell, Marcus, 40547 Düsseldorf (DE); Erkek, David, 5000 Aarau (CH); Schlüter, Lars, 8038 Zürich (CH); Schulz, Dennis, 47058 Duisburg (DE)
(74) Vertreter: Müller, Enno

(56) Entgegenhaltungen:
- CN-A- 111 197 985
- CN-A- 112 526 985
- CN-A- 112 890 692

## Beschreibung

### Gebiet der Technik

Die Erfindung betrifft ein sich selbsttätig fortbewegendes Bodenbearbeitungsgerät mit einer Auswerteeinrichtung, welche ausgebildet ist, das Bodenbearbeitungsgerät anhand einer Umgebungskarte innerhalb einer Umgebung zu navigieren und während einer Fortbewegung einen Verhaltensparameter des Bodenbearbeitungsgerätes und einen Fortbewegungspfad des Bodenbearbeitungsgerätes zu ermitteln, wobei die Auswerteeinrichtung eingerichtet ist, den Verhaltensparameter und den Fortbewegungspfad zu analysieren, abhängig von dem Ergebnis der Analyse automatisch eine No-Go-Area, welche das Bodenbearbeitungsgerät nicht befahren darf, zu ermitteln und die ermittelte No-Go-Area in die Umgebungskarte einzutragen oder eine bereits in der Umgebungskarte eingetragene No-Go-Area zu ändern.

Des Weiteren betrifft die Erfindung ein Verfahren zum Betrieb eines sich selbsttätig fortbewegenden Bodenbearbeitungsgerätes, wobei eine Auswerteeinrichtung des Bodenbearbeitungsgerätes das Bodenbearbeitungsgerät anhand einer Umgebungskarte innerhalb einer Umgebung navigiert und während einer Fortbewegung einen Verhaltensparameter des Bodenbearbeitungsgerätes und einen Fortbewegungspfad des Bodenbearbeitungsgerätes ermittelt, wobei die Auswerteeinrichtung den Verhaltensparameter und den Fortbewegungspfad analysiert, abhängig von dem Ergebnis der Analyse automatisch eine No-Go-Area, welche das Bodenbearbeitungsgerät nicht befahren darf, ermittelt und die ermittelte No-Go-Area in die Umgebungskarte einträgt oder eine bereits in der Umgebungskarte eingetragene No-Go-Area ändert.

### Stand der Technik

Bodenbearbeitungsgeräte der vorgenannten Art sind im Stand der Technik in einer Vielzahl von unterschiedlichen Ausführungsformen bekannt.

Es kann sich bei den Bodenbearbeitungsgeräten beispielsweise um Reinigungsgeräte, Poliergeräte, Rasenmähgeräte oder andere handeln. Insbesondere kann das sich selbsttätig fortbewegende Bodenbearbeitungsgerät in Form eines mobilen Saug- und/oder Wischroboters ausgebildet sein.

Die Veröffentlichungen DE 10 2011 000 536 A1 und DE 10 2008 014 912 A1 offenbaren selbsttätig verfahrbare Roboter zur Reinigung von Fußböden. Die Roboter sind mit Abstandssensoren ausgestattet, welche Abstände zu Hindernissen, wie beispielsweise Möbelstücken oder Raumbegrenzungen, messen können. Aus den gemessenen Abstandsdaten wird eine Umgebungskarte erstellt, anhand welcher eine Fortbewegungsroute geplant werden kann, die eine Kollision mit Hindernissen vermeidet. Die Abstandssensoren arbeiten bevorzugt berührungslos, beispielsweise mit Hilfe von Licht und/oder Ultraschall. Es ist des Weiteren bekannt, den Roboter mit Mitteln zur Rundum-Abstandsmessung zu versehen, beispielsweise mit einem optischen Triangulationssystem, welches auf einer um eine Vertikalachse rotierenden Plattform oder dergleichen angeordnet ist. Die erfassten Abstandsdaten zu Hindernissen werden mittels einer Recheneinrichtung des Roboters zu einer Umgebungskarte verarbeitet und gespeichert, so dass der Roboter im Zuge eines Arbeitsbetriebs auf diese Umgebungskarte zurückgreifen kann, um sich innerhalb der Umgebung zu orientieren.

Im Stand der Technik ist es des Weiteren bekannt, beispielsweise aus der EP 2 294 960 B1, eine Umgebungskarte bzw. Umgebungsdaten während einer Erkundungsfahrt aufzunehmen. Die Erkundungsfahrt wird entweder selbst von dem Bodenbearbeitungsgerät gesteuert oder manuell im Rahmen eines sogenannten Teach-in durch einen Nutzer, wobei der Nutzer das Reinigungsgerät manuell, beispielsweise mittels einer Fernsteuerung, durch die Umgebung steuert. Dabei ist es ebenfalls bekannt, beispielsweise durch anleitendes Abfahren der Umgebung, Flächengrenzen einzugeben und/oder sogenannte No-Go-Areas zu definieren, innerhalb welcher der Reinigungsroboter nicht fahren darf.

Aus der EP 3 613 321 B1 (auch veröffentlicht als US 2020/0064858 A1) ist es des Weiteren bekannt, während einer Bodenbearbeitung von dem Bodenbearbeitungsgerät detektierte Geräteparameter und/oder Umgebungsparameter zum Zwecke einer selbstlernenden Fehlervermeidung in Bezug auf wiederkehrende Muster zu analysieren, die durch eine wiederholt auftretende Kombination eines Fehlers und mindestens eines zeitlich vorausgehenden Umgebungs- und/oder Geräteparameters gekennzeichnet sind.

Dadurch wird erreicht, dass das Bodenbearbeitungsgerät bei der Navigation vorausschauend agiert, um Fehlersituationen, aus welchen es sich nicht selbsttätig befreien kann und/oder welche eine weitere Bearbeitung der zu bearbeitenden Fläche verhindern, im Vorhinein zu vermeiden.

Nachteilig bei den vorgenannten Bodenbearbeitungsgeräten bzw. bei den Verfahren zu deren Betrieb ist, dass eine Auswerteeinrichtung des Bodenbearbeitungsgerätes stets eine große Vielzahl von aktuell und zu einem früheren Zeitpunkt detektierten Parametern auswerten muss, um einen selbstlernenden Effekt zu erzielen, der die manuelle Eingabe von No-Go-Areas durch den Nutzer ersetzt.
Des Weiteren ist im Stand der Technik noch die CN 112526985 A bekannt. Diese offenbart die automatische Definition von No-Go-Areas anhand eines Vergleichs einer Anzahl von Havarie-Situationen des Roboters mit einem Schwellwert. Des Weiteren sind als Parameter zur Definition von No-Go-Areas die Art eines Raumes, die Art eines Hindernisses, eine Anzahl von niedrigen Hindernissen und eine Hindernisdichte offenbart.
Die CN 111197985 A offenbart eine automatische Definition von No-Go-Areas in Abhängigkeit von einer Anzahl von Zellendurchquerungen, welche als abnormale Fortbewegung bewertet werden. Bei schwierigen Umgebungsbedingungen durchfährt der Roboter eine Zelle der Umgebung häufig mehrfach, was als Hinweis auf einen zu vermeidenden Teilbereich gewertet wird.
Aus der CN 112890692 A ist des Weiteren bekannt, dass ein Ort einer Basisstation in der Umgebung als No-Go-Area definiert wird, wobei auch die Lage von beispielsweise Elektrokabeln miteinbezogen werden kann.

### Zusammenfassung der Erfindung

Ausgehend von dem vorgenannten Stand der Technik ist es daher Aufgabe der Erfindung, das Bodenbearbeitungsgerät so auszubilden, dass dieses ein Auftreten zukünftiger Fehlersituationen vermeidet, dabei jedoch möglichst geringe Rechenkapazität in Anspruch nehmen muss.

Zur Lösung der vorgenannten Aufgabe wird vorgeschlagen, dass die Auswerteeinrichtung des Bodenbearbeitungsgerätes eingerichtet ist, den Verhaltensparameter mit mindestens einem definierten Referenzverhaltensparameter zu vergleichen, wobei der Referenzverhaltensparameter eine definierte Fortbewegungsgeschwindigkeit des Bodenbearbeitungsgerätes, eine definierte Drift des Bodenbearbeitungsgerätes, eine definierte Aufenthaltsdauer des Bodenbearbeitungsgerätes pro Flächeneinheit der Umgebung, eine definierte Anzahl von Wendemanövern des Bodenbearbeitungsgerätes pro definiertem Flächenteilbereich der Umgebung oder eine definierte Leistungsaufnahme einer Antriebseinrichtung des Bodenbearbeitungsgerätes pro Zeiteinheit ist.

Die Auswerteeinrichtung des Bodenbearbeitungsgerätes ist selbst dazu geeignet, automatisch eine No-Go-Area innerhalb der Umgebung zu definieren oder zu ändern. Ein manuelles Eingreifen eines Nutzers, insbesondere im Rahmen einer Erkundungsfahrt, ist nicht mehr erforderlich. Die Auswerteeinrichtung des Bodenbearbeitungsgerätes wertet zumindest einen Verhaltensparameter des Bodenbearbeitungsgerätes und einen aktuellen Fortbewegungspfad, insbesondere einen aktuellen Ort des Bodenbearbeitungsgerätes auf dem Fortbewegungspfad, aus, um ein potentielles Fehlerverhalten des Bodenbearbeitungsgerätes, beispielsweise eine Havariesituation, zu erkennen. Für einen Ort, an welchem eine Fehlersituation aufgetreten ist, kann dann eine No-Go-Area innerhalb der Umgebungskarte definiert werden, welche das Bodenbearbeitungsgerät nicht befahren darf. Der Begriff No-Go-Area bezeichnet im Allgemeinen einen für die Fortbewegung des Bodenbearbeitungsgerätes gesperrten Teilbereich der Umgebung, in welchen das Bodenbearbeitungsgerät nicht eintreten darf. Eine No-Go-Area ist üblicherweise durch virtuelle Bereichsgrenzen definiert, die das Bodenbearbeitungsgerät nicht überqueren darf. In der Umgebungskarte werden die Bereichsgrenzen vorzugsweise als Linien dargestellt bzw. hinterlegt. Der Fortbewegungspfad des Bodenbearbeitungsgerätes wird vorzugsweise während einer Bodenbearbeitungstätigkeit von der Detektionseinrichtung aufgezeichnet, beispielsweise von einer Kamera, einem Laserscanner und/oder einem Inertialsensor, wobei die Auswertung der gesammelten Informationen durch die Auswerteeinrichtung des Bodenbearbeitungsgerätes erfolgt. Die Auswerteeinrichtung verarbeitet die gesammelten Informationen vollautomatisch, so dass der Nutzer keine zusätzlichen Arbeitsschritte unternehmen muss, um eine oder mehrere No-Go-Areas in die Umgebungskarte einzutragen. Vielmehr erfolgt die Analyse und Erstellung, Bearbeitung und/oder Erweiterung der Umgebungskarte vollautomatisch durch die Auswerteeinrichtung des Bodenbearbeitungsgerätes. Der Verhaltensparameter des Bodenbearbeitungsgerätes kennzeichnet entweder ein während der Bodenbearbeitung übliches und ordnungsgemäßes Verhalten des Bodenbearbeitungsgerätes, oder aber ein von einer Norm abweichendes Verhalten, welches üblicherweise durch einen Fehler oder eine ungewünschte Situation gekennzeichnet ist. Sofern die Auswerteeinrichtung feststellt, dass an einem bestimmten Ort des Fortbewegungspfades ein solcher ungewünschter Verhaltensparameter auftritt, insbesondere mehrfach über eine Beobachtungszeitspanne, kann für diesen Ort des Fortbewegungspfades eine No-Go-Area definiert werden, welche einen Bereich der Umgebung angibt, den das Bodenbearbeitungsgerät nicht befahren darf. Insbesondere kann eine No-Go-Line definiert werden, welche das Bodenbearbeitungsgerät nicht überschreiten darf. Das Eintragen der No-Go-Line bzw. No-Go-Area in die Umgebungskarte kann auch bedeuten, dass lediglich eine entsprechende Verknüpfung für den betreffenden Ort in der Umgebungskarte gesetzt wird. Alternativ ist es jedoch auch möglich, dass die No-Go-Line bzw. No-Go-Area unmittelbar in die Umgebungskarte eingetragen, d. h. in dieser gespeichert wird. Sofern die Umgebungskarte bereits eine No-Go-Area oder eine No-Go-Line enthält, kann diese in Abhängigkeit von einem aktuellen Analyseergebnis geändert werden, beispielsweise kann eine No-Go-Area vergrößert werden, wenn in unmittelbarer Nähe der bereits gespeicherten No-Go-Area ein neuer Fehlerfall auftritt. Besonders vorteilhaft entfällt durch die erfindungsgemäße Lösung somit ein immer neues Analysieren von Geräteparametern oder Umgebungsparametern in Bezug auf ein potentielles Fehlerverhalten. Stattdessen werden in der Umgebungskarte No-Go-Areas gesetzt, welche das Bodenbearbeitungsgerät grundsätzlich nicht befahren darf. Dies trägt dann auch in Zukunft zu einer Fehlervermeidung bzw. Vermeidung ungewünschter Situationen bei.

Ein sich selbsttätig fortbewegendes Bodenbearbeitungsgerät im Sinne der Erfindung ist beispielsweise ein Saugroboter, Wischroboter, Mähroboter oder ähnliches. Das sich selbsttätig fortbewegende Bodenbearbeitungsgerät verfügt üblicherweise über eine Navigationseinrichtung, mit welcher sich das Bodenbearbeitungsgerät in der Umgebung orientieren und lokalisieren kann. Das Navigationssystem beinhaltet beispielsweise einen Abstandssensor wie einen 3D-Laserscanner oder ähnliches, mit welchem Abstände zu Hindernissen in der Umgebung gemessen werden. Anhand der gemessenen Abstände kann das automatisch betriebene Bodenbearbeitungsgerät eine Umgebungskarte erstellen, welche einen Grundriss der Umgebung, beispielsweise einen Grundriss einer Wohnung oder zumindest eines oder mehrerer Räume, beinhaltet, sowie Begrenzungen von Objekten, beispielsweise von Möbelstücken, Dekorationsobjekten und ähnlichem. Die Umgebungskarte kann beispielsweise mittels eines sogenannten SLAM-Algorithmus (Simultaneous Localization And Measurement-Algorithmus) erstellt werden. Auf der Grundlage der Umgebungskarte kann dann insbesondere auch ein Arbeitsplan für das Bodenbearbeitungsgerät erstellt werden, in dessen Rahmen eine Mehrzahl von Bodenbearbeitungsschritten vorgeplant ist. Der Bodenbearbeitungsplan kann beispielsweise eine erste Bodenbearbeitungstätigkeit zu einem ersten Zeitpunkt an einem ersten Ort der Umgebung vorsehen, während eine zweite Bodenbearbeitungstätigkeit für einen späteren Zeitpunkt an demselben oder einem anderen Ort der Umgebung vorgeplant ist. Durch die erfindungsgemäße automatische Definition von No-Go-Areas in der Umgebungskarte können dann gegebenenfalls auch die vorgeplanten Bodenbearbeitungstätigkeiten geändert werden, insbesondere in Bezug auf deren Ausführungsreihenfolge variiert werden. Insbesondere können Teilbereiche der Umgebung für die Ausführung einer Bodenbearbeitungstätigkeit neu priorisiert werden, indem eine Reihenfolge der zur Bodenbearbeitung geplanten Umgebungsteilbereiche neu festgelegt wird.

Erfindungsgemäß wird vorgeschlagen, dass die Auswerteeinrichtung eingerichtet ist, den Verhaltensparameter mit mindestens einem definierten Referenzverhaltensparameter zu vergleichen. Die definierten Referenzverhaltensparameter dienen zum Erkennen einer Situation, welche das Eintragen oder Ändern einer No-Go-Area in der Umgebungskarte erfordert oder empfiehlt. Die definierten Referenzverhaltensparameter können vorzugsweise in einem lokalen Speicher des Bodenbearbeitungsgerätes gespeichert sein, oder auch in einem externen Speicher, beispielsweise auf einem Server des Herstellers des Bodenbearbeitungsgerätes, wobei die Auswerteeinrichtung des Bodenbearbeitungsgerätes beispielsweise durch drahtlose Kommunikation auf die gespeicherten Referenzverhaltensparameter zugreift, um in Abhängigkeit von dem Ergebnis des Vergleichens eines aktuellen Verhaltensparameters des Bodenbearbeitungsgerätes mit einem oder mehreren definierten Referenzverhaltensparametern eine No-Go-Area zu speichern bzw. zu ändern.

Ein definierter Referenzverhaltensparameter kann eine definierte Fortbewegungsgeschwindigkeit des Bodenbearbeitungsgerätes, eine definierte Drift des Bodenbearbeitungsgerätes, eine definierte Aufenthaltsdauer des Bodenbearbeitungsgerätes pro Flächeneinheit der Umgebung, eine definierte Anzahl von Wendemanövern des Bodenbearbeitungsgerätes pro definiertem Flächenteilbereich der Umgebung oder eine definierte Leistungsaufnahme einer Antriebseinrichtung des Bodenbearbeitungsgerätes pro Zeiteinheit sein. Darüber hinaus können noch andere Referenzverhaltensparameter definiert sein, welche ein Verhalten in einer fehlerfreien oder ordnungsgemäß verlaufenden Bodenbearbeitungssituation des Bodenbearbeitungsgerätes betreffen. Eine zu vermeidende Situation kann im Gegensatz dazu beispielsweise ein unüblich lang dauernder Aufenthalt des Roboters in einem bestimmten Bereich sein, wobei der unüblich lang dauernde Aufenthalt gekennzeichnet ist durch eine Aufenthaltsdauer, welche länger ist als eine definierte Maximalaufenthaltsdauer, welche zum Beispiel pro Flächenbereich der Umgebung angenommen wird. Der unübliche lange Aufenthalt kann beispielsweise durch einen bestimmten Bodenbelag verursacht sein, oder dadurch, dass ein Hindernis in dem betreffenden Umgebungsteilbereich existiert, an welchem sich das Bodenbearbeitungsgerät festfährt und/oder an welchem das Bodenbearbeitungsgerät eine Vielzahl von Wendemanövern ausüben muss. Insofern kann alternativ als Referenzparameter beispielsweise auch eine definierte Anzahl von Wendemanövern des Bodenbearbeitungsgerätes pro definiertem Flächenteilbereich der Umgebung oder pro definierter Zeiteinheit vorgegeben sein. Messbar ist alternativ auch eine Leistungsaufnahme einer Antriebseinrichtung, beispielsweise einer Antriebseinrichtung für Antriebsräder des Bodenbearbeitungsgerätes, welche auf einem Teppichboden regelmäßig höher ist als auf einem glatten Bodenbelag, insbesondere Hartboden. Bedingt durch eine Art des Bodenbelages kann das Befahren durch das Bodenbearbeitungsgerät zudem erschwert sein. Bei Teppichboden kann durch die Florhöhe eine deutliche Minderung der Fahrgeschwindigkeit messbar sein, welche durch den hohen Reibungswiderstand bedingt ist. Zudem kann eine Polrichtung der Teppichfasern eine Drift verursachen, so dass das Bodenbearbeitungsgerät trotz gleich bemessenem Antrieb der Antriebsräder in eine Kurve oder eine Schräglage gedrängt wird. Auch in diesen Fällen wird durch die Analyse der Fahrdaten, d. h. der Verhaltensparameter, ein Problem bzw. eine ungewünschte Situation erkannt und bestenfalls zur Definition einer No-Go-Area verwendet. Bei einer späteren Bodenbearbeitung bzw. Fortbewegung des Bodenbearbeitungsgerätes durch die Umgebung ist dann ausgeschlossen, dass sich das Bodenbearbeitungsgerät in den fehlerträchtigen Umgebungsteilbereich hinein bewegt, da dieser zuvor durch eine No-Go-Area "abgesperrt" wurde, so dass im Vorhinein eine Wiederholung der fehlerhaften Situation vermieden wird.

Es kann vorgesehen sein, dass der Referenzverhaltensparameter durch einen Hersteller des Bodenbearbeitungsgerätes vordefiniert ist oder manuell durch einen Nutzer des Bodenbearbeitungsgerätes definierbar ist. In dem erstgenannten Fall wird herstellerseitig bereits eine Mehrzahl von Referenzverhaltensparametern definiert, welche regelmäßig zu einem Fehlerfall oder einer nicht ordnungsgemäßen Funktionsweise des Bodenbearbeitungsgerätes führen. Derartige vordefinierte Referenzverhaltensparameter kann der Nutzer des Bodenbearbeitungsgerätes gegebenenfalls noch überarbeiten, löschen oder ändern. Alternativ kann vorgesehen sein, dass der Nutzer des Bodenbearbeitungsgerätes selbst Referenzverhaltensparameter definiert, die zum Vergleich der aktuellen Verhaltensparameter des Bodenbearbeitungsgerätes dienen, um dann zu entscheiden, ob eine No-Go-Area gesetzt werden sollte oder nicht. Beispielsweise kann der Nutzer des Bodenbearbeitungsgerätes von sich aus bestimmte Situationen als lästig empfinden, da diese mit einer erhöhten Aufenthaltsdauer oder einem erhöhten Geräuschpegel des Bodenbearbeitungsgerätes einhergehen, beispielsweise wenn sich das Bodenbearbeitungsgerät intensiv um die Reinigung eines Umgebungsteilbereiches bemüht, welcher eine Vielzahl von Stuhlbeinen aufweist und somit eine Vielzahl von Wendemanövern bedingt. Diesbezüglich kann der Nutzer dann beispielsweise entscheiden, dass eine manuelle Reinigung dieses Umgebungsteilbereiches vorteilhafter ist und generell einen Referenzverhaltensparameter vorgeben, welcher eine maximale Anzahl von Wendemanövern pro Umgebungsteilbereich definiert, die das Bodenbearbeitungsgerät noch ausführen darf. Sollte bei einer ersten Ausführung einer Bodenbearbeitungstätigkeit dann eine Überschreitung des Referenzverhaltensparameters vorliegen, wird für den betreffenden Umgebungsteilbereich automatisch eine No-Go-Area gesetzt. Bei einer nachfolgenden Fortbewegung durch die Umgebung wird das Bodenbearbeitungsgerät den durch die No-Go-Area definierten Umgebungsteilbereich dann nicht mehr befahren. Zur Eingabe von Referenzverhaltensparametern kann der Nutzer besonders vorzugsweise eine Applikation verwenden, die auf einem externen Endgerät installiert ist, beispielsweise einem Mobiltelefon oder einem Tabletcomputer des Nutzers. Das externe Endgerät kommuniziert drahtlos mit dem Bodenbearbeitungsgerät, um die Referenzverhaltensparameter zu übertragen. Ebenso kann über diesen Kommunikationsweg auch eine Umgebungskarte von dem Bodenbearbeitungsgerät an das externe Endgerät übermittelt werden.

Darüber hinaus kann vorgesehen sein, dass die Auswerteeinrichtung eingerichtet ist, einem Nutzer die ermittelte No-Go-Area in der Umgebungskarte anzuzeigen, insbesondere die ermittelte No-Go-Area an ein mit dem Bodenbearbeitungsgerät in Kommunikationsverbindung stehendes externes Endgerät zu übermitteln. Der Nutzer bekommt die Umgebungskarte somit samt der ermittelten No-Go-Area angezeigt, insbesondere auf einem zu dem Bodenbearbeitungsgerät externen Endgerät, insbesondere einem Mobiltelefon oder ähnlichem. Die Darstellung der No-Go-Area kann entweder wie zuvor erläutert auf einem externen Endgerät oder auch auf einem eigenen Display des Bodenbearbeitungsgerätes erfolgen. Es empfiehlt sich, die in der Umgebungskarte gespeicherten No-Go-Areas besonders zu kennzeichnen, beispielsweise farbig oder mit übermäßiger Strichstärke, so dass der Nutzer unmittelbar einen Eindruck über die nicht von dem Bodenbearbeitungsgerät zu bearbeitenden Umgebungsteilbereich erhält.

Insbesondere kann vorgesehen sein, dass die Auswerteeinrichtung eingerichtet ist, einem Nutzer die ermittelte No-Go-Area vor einem Abspeichern der No-Go-Area in der Umgebungskarte als provisorisch gekennzeichnet anzuzeigen. Gemäß dieser Ausgestaltung wird die No-Go-Area somit nicht unmittelbar in der Umgebungskarte gespeichert, sondern das Abspeichern erfordert zuvor das Einverständnis des Nutzers. Anhand der provisorischen Einträge in der Umgebungskarte kann der Nutzer die Lage der No-Go-Areas prüfen und dann entweder den Vorschlag für die No-Go-Area verwerfen oder annehmen. Alternativ oder zusätzlich kann es auch vorgesehen sein, dass der Nutzer die No-Go-Area verschieben kann, in deren Größe verändern kann oder ähnliches. Erst wenn der Nutzer die Eintragung der No-Go-Area in die Umgebungskarte bestätigt, wird diese permanent gesetzt und damit für eine Betriebstätigkeit des Bodenbearbeitungsgerätes wirksam, was dazu führt, dass das Bodenbearbeitungsgerät diese No-Go-Area bei Fortbewegung durch die Umgebung ausspart.

In diesem Sinne kann insbesondere vorgesehen sein, dass die Auswerteeinrichtung eingerichtet ist, den Nutzer aufzufordern, das Abspeichern der No-Go-Area zu bestätigen. Hierzu können auf einem Display des Bodenbearbeitungsgerätes oder des externen Endgerätes besonders vorteilhaft Auswahlfelder vorgesehen sein, welche im Sinne von "ja" und "nein" das Abspeichern bestätigen oder ablehnen.

Zudem wird vorgeschlagen, dass die Auswerteeinrichtung eingerichtet ist, eine No-Go-Area nur zur Berücksichtigung bei einer bestimmten Betriebsart des Bodenbearbeitungsgerätes zu definieren. Die Betriebsart kann insbesondere eine Bodenbearbeitung mit einer bestimmten Bearbeitungsintensität sein. Gemäß dieser Ausgestaltung können für unterschiedliche Bodenbearbeitungsaufgaben unterschiedliche Vorgaben bezüglich der Definition der No-Go-Areas gemacht werden. Beispielsweise können bestimmte Umgebungsteilbereiche als No-Go-Area von einer Bodenbearbeitung ausgenommen werden, wenn das Bodenbearbeitungsgerät einen Modus "schnelle Grundreinigung" ausführen soll. Bei einer demgegenüber definierten "Intensivreinigung" können die als No-Go-Area definierten Umgebungsteilbereiche trotzdem von dem Bodenbearbeitungsgerät befahren werden, wobei dann in Kauf genommen wird, dass sich gegebenenfalls eine ungewünschte Situation einstellt, beispielsweise eine verlängerte Aufenthaltsdauer des Bodenbearbeitungsgerätes in dem betreffenden Umgebungsteilbereich, eine erhöhte Leistungsaufnahme oder Geräuschentwicklung des Bodenbearbeitungsgerätes und dergleichen. Im Sinne einer "bestimmten Betriebsart" kann somit eine Bodenbearbeitung mit einer definierten Bearbeitungsintensität vorgesehen sein, beispielsweise unterschieden als Eco-Modus, Normal-Modus und Intensiv-Modus.

Des Weiteren wird vorgeschlagen, dass die Auswerteeinrichtung eingerichtet ist, einem Nutzer in der Umgebungskarte eine Häufigkeit des Auftretens eines bestimmten Verhaltensparameters des Bodenbearbeitungsgerätes entlang des Fortbewegungspfades anzuzeigen. Die Anzeige der Häufigkeit kann insbesondere in einer Heat-Map erfolgen. Gemäß dieser Ausgestaltung kann die Auswerteeinrichtung Problembereiche in der Umgebungskarte kenntlich machen und für den Nutzer optisch kennzeichnen, insbesondere indem die Häufigkeit des Auftretens von Problemfällen oder eine in einem bestimmten Umgebungsteilbereich verbrachte Zeitspanne des Bodenbearbeitungsgerätes grafisch hervorgehoben wird, beispielsweise durch die Größe eines definierten Symbols oder eine bestimmte Farbgebung.

Neben dem zuvor beschriebenen Bodenbearbeitungsgerät wird mit der Erfindung des Weiteren auch ein Verfahren zum Betrieb eines sich selbsttätig fortbewegenden Bodenbearbeitungsgerätes vorgeschlagen, wobei eine Auswerteeinrichtung des Bodenbearbeitungsgerätes das Bodenbearbeitungsgerät anhand einer Umgebungskarte innerhalb einer Umgebung navigiert und während einer Fortbewegung einen Verhaltensparameter des Bodenbearbeitungsgerätes und einen Fortbewegungspfad des Bodenbearbeitungsgerätes ermittelt, wobei die Auswerteeinrichtung den Verhaltensparameter und den Fortbewegungspfad analysiert, abhängig von dem Ergebnis der Analyse automatisch eine No-Go-Area, welche das Bodenbearbeitungsgerät nicht befahren darf, ermittelt und die ermittelte No-Go-Area in die Umgebungskarte einträgt oder eine bereits in der Umgebungskarte eingetragene No-Go-Area ändert, wobei die Auswerteeinrichtung den Verhaltensparameter mit mindestens einem definierten Referenzverhaltensparameter vergleicht, wobei der Referenzverhaltensparameter eine definierte Fortbewegungsgeschwindigkeit des Bodenbearbeitungsgerätes, eine definierte Drift des Bodenbearbeitungsgerätes, eine definierte Aufenthaltsdauer des Bodenbearbeitungsgerätes pro Flächeneinheit der Umgebung, eine definierte Anzahl von Wendemanövern des Bodenbearbeitungsgerätes pro definiertem Flächenteilbereich der Umgebung oder eine definierte Leistungsaufnahme einer Antriebseinrichtung des Bodenbearbeitungsgerätes pro Zeiteinheit ist. Das Verfahren kann insbesondere vorgesehen sein zum Betrieb eines erfindungsgemäßen Bodenbearbeitungsgerätes. Die zuvor genannten Merkmale und Vorteile des erfindungsgemäßen Bodenbearbeitungsgerätes gelten somit entsprechend auch für das erfindungsgemäße Verfahren. Zur Vermeidung von Wiederholungen wird daher hiermit auf die zuvor dargestellte Funktionsweise des Bodenbearbeitungsgerätes verwiesen.

### Kurze Beschreibung der Zeichnungen

Im Folgenden wird die Erfindung anhand von Ausführungsbeispielen näher erläutert. Es zeigen:
- Fig. 1: ein erfindungsgemäßes Bodenbearbeitungsgerät,
- Fig. 2: eine Umgebung mit einer Mehrzahl von Umgebungsteilbereichen und einem darin sich fortbewegenden Bodenbearbeitungsgerät,
- Fig. 3: eine Fehlersituation,
- Fig. 4: eine schematische Darstellung einer Tabelle zum Vergleich von Verhaltensparametern des Bodenbearbeitungsgerätes mit Referenzverhaltensparametern,
- Fig. 5: einen Nutzer des Bodenbearbeitungsgerätes mit einem externen Endgerät zur Anzeige einer Umgebungskarte.

### Beschreibung der Ausführungsformen

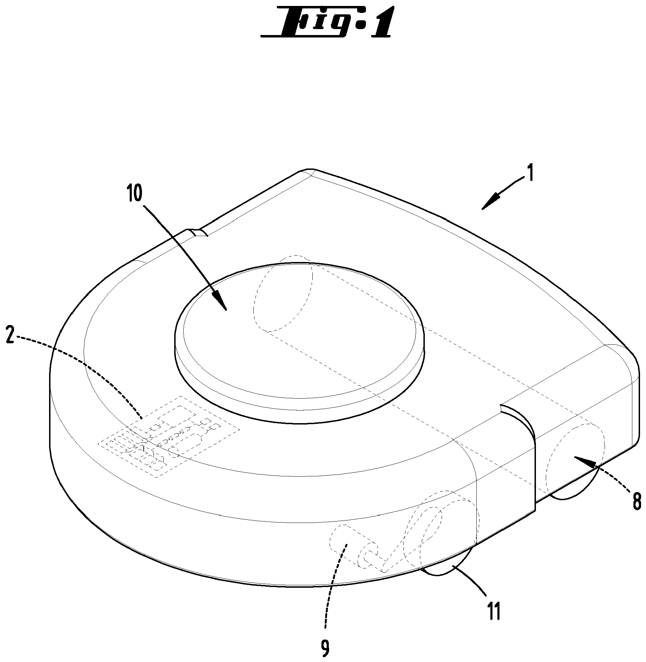

Figur 1 zeigt beispielhaft ein sich selbsttätig innerhalb einer Umgebung fortbewegendes Bodenbearbeitungsgerät 1, welches hier als Saugroboter ausgebildet ist. Das Bodenbearbeitungsgerät 1 verfügt über eine Antriebseinrichtung 9 in Form eines Elektromotors, welcher einem Rad 11 des Bodenbearbeitungsgerätes 1 zugeordnet ist. Insgesamt weist das Bodenbearbeitungsgerät 1 hier beispielsweise zwei solcher motorisch angetriebenen Räder 11 auf (in Figur 1 nur eines dargestellt). Jeder Antriebseinrichtung 9 kann des Weiteren (hier nicht dargestellt) eine Odometrie-Messeinrichtung zugeordnet sein, die eine Anzahl von Umdrehungen des jeweiligen Rades 11 pro Zeiteinheit misst. Daraus kann eine durch das Bodenbearbeitungsgerät 1 zurückgelegte Wegstrecke ermittelt werden. Das Bodenbearbeitungsgerät 1 verfügt des Weiteren über ein Bodenbearbeitungselement 8 in Form einer um eine im Wesentlichen horizontale Rotationsachse rotierenden Reinigungsbürste. Das Bodenbearbeitungselement 8 ist ebenfalls mittels eines nicht näher dargestellten Elektromotors angetrieben. Jedem Elektromotor des Bodenbearbeitungsgerätes 1 kann eine nicht dargestellte Detektionseinrichtung zugeordnet sein, die eine Leistungsaufnahme des Elektromotors detektiert. Die durch die Detektionseinrichtungen aufgenommenen Messdaten können mittels einer Auswerteeinrichtung 2 analysiert werden, um beispielsweise einen Betriebsfehler des Bodenbearbeitungsgerätes 1 zu erkennen.

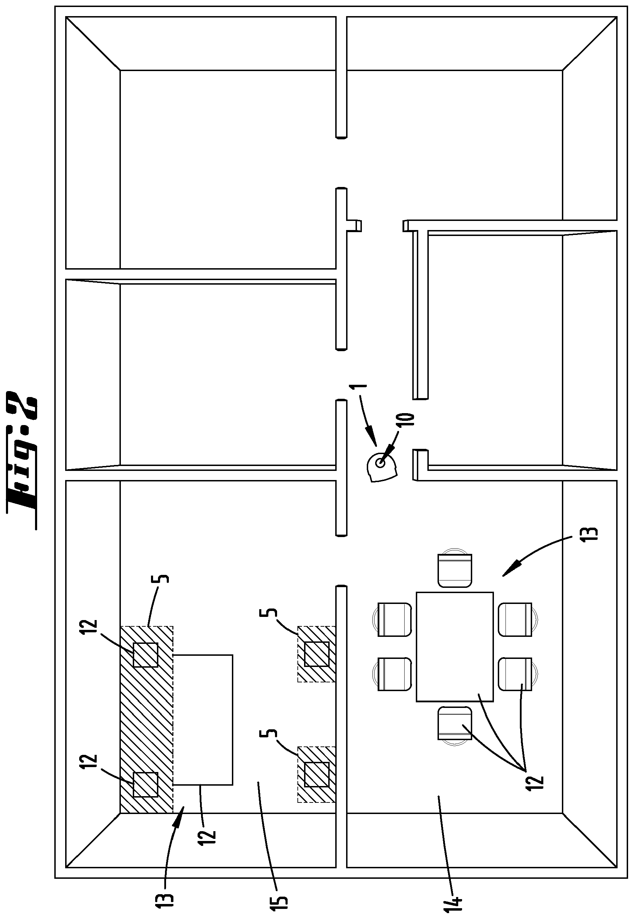

Das Bodenbearbeitungsgerät 1 verfügt zudem über eine Hindernisdetektionseinrichtung 10, welche hier beispielsweise als eine Laser-Triangulationsmesseinrichtung ausgebildet ist, die (hier nicht dargestellt) innerhalb des Gehäuses des Bodenbearbeitungsgerätes 1 angeordnet ist und einen Lichtstrahl über reflektierende Elemente nach außen in die Umgebung emittiert. Die Hindernisdetektionseinrichtung 10 kann vorzugsweise in einem 360°-Bereich um das Bodenbearbeitungsgerät 1 herum Abstände zu Hindernissen 12 detektieren. Die Auswerteeinrichtung 2 des Bodenbearbeitungsgerätes 1 erstellt aus diesen Messwerten eine Umgebungskarte 3 (siehe beispielsweise Figur 2), anhand welcher sich das Bodenbearbeitungsgerät 1 bei einer Fahrt orientieren kann. Innerhalb der erstellten Umgebungskarte 3 kann auch die aktuelle Position und Orientierung des Bodenbearbeitungsgerätes 1 ermittelt und dargestellt werden.

Die Auswerteeinrichtung 2 des Bodenbearbeitungsgerätes 1 ist dazu ausgebildet, einen Fehler oder eine zu vermeidende Situation des Bodenbearbeitungsgerätes 1 zu ermitteln, indem die Detektionsergebnisse einer oder mehrerer Detektionseinrichtungen des Bodenbearbeitungsgerätes 1 ausgewertet werden. Ein Fehler oder eine ungewünschte Situation liegt dann vor, wenn beispielsweise eine Fortbewegung des Bodenbearbeitungsgerätes 1 zu lange dauert, zu viele Wendemanöver beinhaltet, zu viel Energie benötigt, eine Havarie des Bodenbearbeitungsgerätes 1 beinhaltet und dergleichen. Eine Havariesituation kann beispielsweise vorliegen, wenn das Bodenbearbeitungsgerät 1 an einem Hindernis 12 festgefahren ist, beispielsweise an einem Bodenbügel eines Schwingstuhls, und sich nicht selbsttätig oder nur mit erhöhtem Energieaufwand aus der Situation befreien kann.

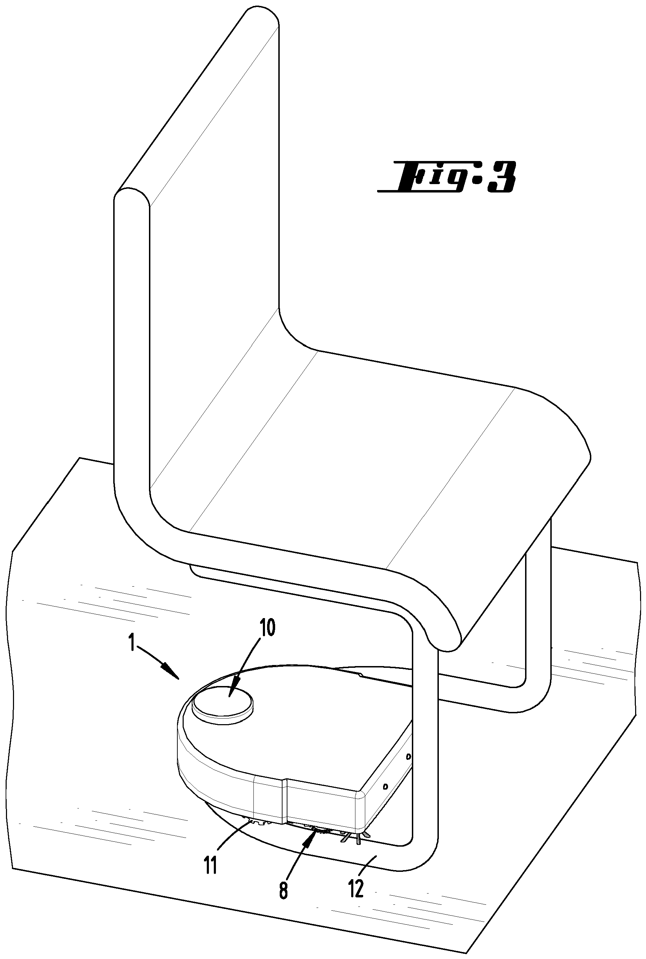

Figur 2 zeigt eine Wohnungsumgebung mit einer Mehrzahl von Räumen, welche unter anderem ein Esszimmer 14 und ein Wohnzimmer 15 aufweisen. An verschiedenen Orten innerhalb des Esszimmers 14 und des Wohnzimmers 15 existieren Bereiche, welche schwierig durch ein sich selbsttätig fortbewegendes Bodenbearbeitungsgerät 1 bearbeitbar sind, beispielsweise weil dort engstehende Hindernisse 12 existieren. Beispielhaft weist das Esszimmer 14 hier eine Essgruppe mit einem Tisch und sechs Schwingstühlen auf, wobei die Schwingstühle wie in Figur 3 dargestellt einen Bodenbügel als Fußteil aufweisen, auf welchen das Bodenbearbeitungsgerät 1 zumindest teilweise aufsetzen kann, so dass zumindest eines der Räder 11 den Kontakt zu der zu reinigenden Fläche verliert. Häufig ist es gar nicht möglich, dass sich das Bodenbearbeitungsgerät 1 selbsttätig aus einer solchen Situation befreit. Zumindest erfordert die Befreiung jedoch einen erhöhten Energieaufwand einer Antriebseinrichtung 9 der Räder 11 oder des Bodenbearbeitungselementes 8, um das Bodenbearbeitungsgerät 1 über den Bodenbügel hinaus zu verkippen, so dass eines oder beide Räder 11 des Bodenbearbeitungsgerätes 1 wieder Bodenkontakt erlangen. Es versteht sich von selbst, dass derartige Fehlersituationen des Bodenbearbeitungsgerätes 1 vermieden werden sollen. Des Weiteren gibt es andere ungewünschte Situationen des Bodenbearbeitungsgerätes 1, welche zwar keine Havarie und damit vollständige Bewegungsunfähigkeit des Bodenbearbeitungsgerätes 1 beinhalten, aber stattdessen ein abnormes Verhalten des Bodenbearbeitungsgerätes 1 bedeuten, welches von einem Nutzer des Bodenbearbeitungsgerätes 1 nicht gewünscht ist, da dies eine längere Zeitspanne für eine Bodenbearbeitung mit sich bringt. Ein ungewünschtes Verhalten des Bodenbearbeitungsgerätes 1 ist gekennzeichnet beispielsweise durch Verhaltensparameter wie eine gegenüber einer Referenz erniedrigte Fortbewegungsgeschwindigkeit, eine Drift des Bodenbearbeitungsgerätes 1, eine gegenüber einer Referenz erhöhte Aufenthaltsdauer des Bodenbearbeitungsgerätes 1 in einem bestimmten Umgebungsteilbereich, eine erhöhte Anzahl von Wendemanövern, eine erhöhte Leistungsaufnahme einer Antriebseinrichtung 9 oder andere. Beispielsweise kann es in dem Wohnzimmer 15 gemäß Figur 2 zwischen verschiedenen Hindernissen 12, hier beispielsweise einem Sofa und nahestehenden Lautsprechern zu engen Gassen oder Umgebungsteilbereichen kommen, für deren Bodenbearbeitung das Bodenbearbeitungsgerät 1 eine Vielzahl von Wendemanövern ausführen muss. Verglichen mit freien Bodenflächen ohne Hindernisse 12 hält sich das Bodenbearbeitungsgerät 1 somit sehr lange in dem jeweiligen Umgebungsteilbereich auf. Gemäß der Erfindung werden daher an solchen schwierig zu bearbeitenden Umgebungsteilbereichen automatisch No-Go-Areas 5 durch das Bodenbearbeitungsgerät 1 definiert, welche das Bodenbearbeitungsgerät 1 nicht befahren darf. Die Definition von No-Go-Areas 5 erfolgt aufgrund von Verhaltensparametern 4 des Bodenbearbeitungsgerätes 1, welche die Auswerteeinrichtung 2 des Bodenbearbeitungsgerätes 1 erkennen kann. Wenn sich ein aktueller Verhaltensparameter 4 des Bodenbearbeitungsgerätes 1 von zulässigen Bereichen eines Referenzverhaltensparameters 6 unterscheidet, kann eine ungewünschte Situation definiert werden, welche dann zum Einrichten einer No-Go-Area 5 in der Umgebung führt. Hierauf wird später noch näher eingegangen.

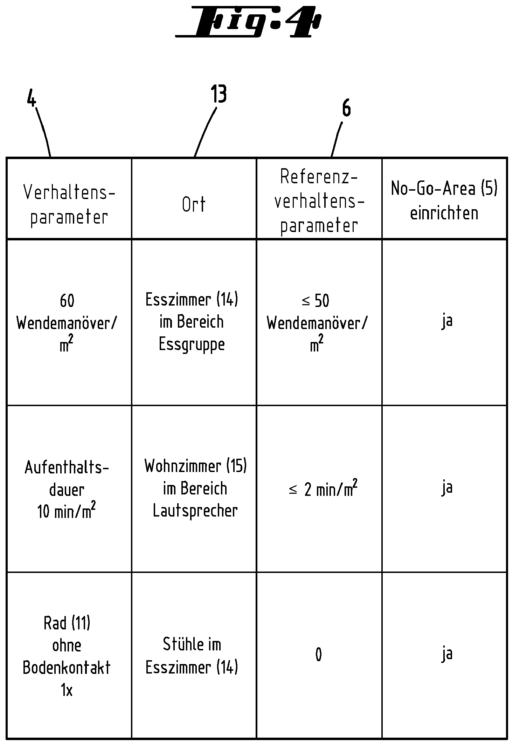

Die Figur 4 zeigt zunächst rein schematisch in Tabellenform eine Vergleichsgrundlage, welche die Auswerteeinrichtung 2 des Bodenbearbeitungsgerätes 1 nutzt, um ein aktuelles Verhalten des Bodenbearbeitungsgerätes 1 als normal oder abnormal zu bewerten. Zu diesem Zweck sind zunächst Verhaltensparameter 4 festgelegt, welche durch eine Detektionseinrichtung des Bodenbearbeitungsgerätes 1 ermittelt werden können. Zu diesen Verhaltensparametern 4 gehören hier beispielsweise eine Anzahl von Wendemanövern pro Quadratmeter, eine Aufenthaltsdauer des Bodenbearbeitungsgerätes 1 pro Quadratmeter und ein fehlender Bodenkontakt eines Rades 11. Darüber hinaus sind noch eine Vielzahl anderer Verhaltensparameter 4 detektierbar und auswertbar, beispielsweise (aber nicht abschließend) eine Schräglage des Bodenbearbeitungsgerätes 1 relativ zu der zu reinigenden Fläche, eine Fortbewegungsgeschwindigkeit des Bodenbearbeitungsgerätes 1, eine Drift des Bodenbearbeitungsgerätes 1, eine bestimmte Leistungsaufnahme einer Antriebseinrichtung 9 des Bodenbearbeitungsgerätes 1 und weitere. Bezogen auf diese Verhaltensparameter 4 sind in einem Speicher des Bodenbearbeitungsgerätes 1 sogenannte Referenzverhaltensparameter 6 hinterlegt, welche für einen Vergleich der Ist-Verhaltensparameter 4 des Bodenbearbeitungsgerätes 1 dienen. Hier sind in der dritten Spalte der in Figur 4 gezeigten Tabelle als Referenzverhaltensparameter 6 unterschiedliche Wertebereiche definiert, welche einen aktuellen Verhaltensparameter 4 des Bodenbearbeitungsgerätes 1 noch als "normal" charakterisieren. Bezogen auf eine Anzahl von Wendemanövern des Bodenbearbeitungsgerätes 1 ist ein zulässiger Wertebereich des Referenzverhaltensparameters 6 von 0 bis ≤ 50 Wendemanövern pro Quadratmeter definiert. Sofern ein aktueller Verhaltensparameter 4 des Bodenbearbeitungsgerätes 1 somit beispielsweise 60 Wendemanöver pro Quadratmeter beträgt, liegt der aktuelle Verhaltensparameter 4 außerhalb des Wertebereiches des Referenzverhaltensparameters 6, was dazu führt, dass die aktuelle Situation des Bodenbearbeitungsgerätes 1 als abnormal qualifiziert wird. Für eine zulässige Aufenthaltsdauer des Bodenbearbeitungsgerätes 1 pro Quadratmeter der Umgebung ist hier beispielsweise ein Referenzverhaltensparameter 6 von ≤ 2 Minuten pro Quadratmeter definiert. Des Weiteren kann ein Verhaltensparameter 4 des Bodenbearbeitungsgerätes 1 ein fehlender Bodenkontakt eines Rades 11 des Bodenbearbeitungsgerätes 1 sein. Hier ist im Rahmen eines Referenzverhaltensparameters 6 definiert, dass die Anzahl der fehlenden Bodenkontakte nur den Wert "0" annehmen darf. Dies bedeutet, dass bereits ein einziger fehlender Bodenkontakt eines Rades 11 als abnormal qualifiziert wird. Die in der ersten Spalte der Tabelle gemäß Figur 4 dargestellten aktuellen Verhaltensparameter 4 werden dann mit den zulässigen Bereichen gemäß des definierten Referenzverhaltensparameters 6 verglichen und eine No-Go-Area 5 an dem betreffenden Ort 13 der Umgebung eingerichtet, an welchem das Bodenbearbeitungsgerät 1 ein abnormales Verhalten zeigt oder gezeigt hat. Gemäß dem in Figur 4 dargestellten Beispiel werden hier für alle Orte 13, welche beispielhaft angegeben sind, No-Go-Areas 5 eingerichtet (No-Go-Area (5) einrichten: "ja").

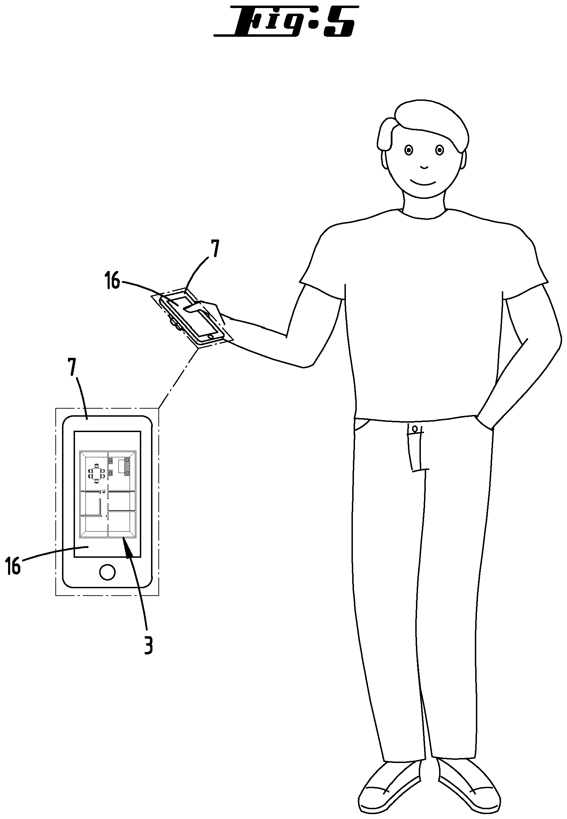

Die Figur 5 zeigt schließlich einen Nutzer des Bodenbearbeitungsgerätes 1 mit einem externen Endgerät 7, welches hier beispielsweise ein Mobiltelefon ist. Alternativ kommen selbstverständlich auch andere externe Endgeräte 7 zur Ausführung der Erfindung in Frage, beispielsweise übliche Tabletcomputer, Laptops oder ähnliche. Das externe Endgerät 7 weist in üblicher Art und Weise ein Display 16 auf, auf welchem dem Nutzer Informationen angezeigt werden können. Hier ist auf dem Display 16 des externen Endgerätes 7 eine Umgebungskarte 3 der Umgebung dargestellt, welche die Umgebung des Bodenbearbeitungsgerätes 1 darstellt (Umgebung gemäß Figur 2). Über das Display 16, welches hier vorzugsweise als Touchscreen ausgebildet ist, kann der Nutzer des Weiteren Eingaben tätigen und mit dem Bodenbearbeitungsgerät 1 kommunizieren. Zu diesem Zweck ist auf dem externen Endgerät 7 eine Applikation eingerichtet, welche geeignet ist, das Bodenbearbeitungsgerät 1 zu steuern und mit diesem zu kommunizieren.

Die in Figur 4 definierten Referenzverhaltensparameter 6 können durch einen Hersteller des Bodenbearbeitungsgerätes 1 vordefiniert sein oder aber alternativ durch einen Nutzer des Bodenbearbeitungsgerätes 1 definiert sein. Des Weiteren ist es auch möglich, dass der Hersteller Referenzverhaltensparameter 6 vordefiniert, die der Nutzer dann nach seinem Belieben auswählen und/oder ändern kann, um die Toleranz des Bodenbearbeitungsgerätes 1 gegenüber bestimmten Situationen anzupassen.

Im Folgenden wird erläutert, wie das Bodenbearbeitungsgerät 1 automatisch No-Go-Areas 5 innerhalb der Umgebung definiert, damit das Bodenbearbeitungsgerät 1 bei zukünftigen Bodenbearbeitungstätigkeiten nicht mehr in die problematischen Umgebungsteilbereiche fährt und dort ein ungewünschtes Verhalten zeigt, beispielsweise eine zu große Zeitspanne benötigt, um die Bodenbearbeitungstätigkeit auszuführen.

Um das Bodenbearbeitungsgerät 1 zu befähigen, zukünftige Probleme und/oder ungewünschte Situationen innerhalb der Umgebung zu vermeiden, erfolgt zunächst eine Detektion der aktuellen Verhaltensparameter 4 des Bodenbearbeitungsgerätes 1 innerhalb der Umgebung sowie eine anschließende Analyse und Auswertung der aktuellen Verhaltensparameter 4 in Bezug auf durch den Hersteller oder den Nutzer definierte Referenzverhaltensparameter 6. Dazu werden im Rahmen beispielsweise einer Erkundungsfahrt oder Bearbeitungsfahrt aufgenommene Ist-Verhaltensparameter 4 des Bodenbearbeitungsgerätes 1 detektiert. Während der Fahrt verfährt das Bodenbearbeitungsgerät 1 anhand eines vordefinierten oder willkürlichen Fortbewegungspfades durch die Umgebung, wobei der Fortbewegungspfad vorzugsweise alle Umgebungsteilbereiche der Umgebung einschließt und damit eine möglichst vollständige Bodenbearbeitung der jeweiligen Umgebungsteilbereiche ermöglicht. Dazu werden die Detektionsdaten der Detektionseinrichtungen des Bodenbearbeitungsgerätes 1 von einem Algorithmus der Auswerteeinrichtung 2 analysiert, indem die aktuellen Verhaltensparameter 4 mit den vordefinierten Referenzverhaltensparametern 6 verglichen werden, nämlich mit herstellerseitig vordefinierten oder von dem Nutzer einstellbaren oder zumindest änderbaren Wertebereichen. Abweichungen zwischen dem aktuellen Verhalten des Bodenbearbeitungsgerätes 1 und einem optimalen Verhalten können so erkannt werden. Eine wesentliche Grundlage bilden dabei die Kartierungsdaten der Hindernisdetektionseinrichtung 10 des Bodenbearbeitungsgerätes 1, welche zu einer Umgebungskarte 3 verarbeitet sind und die in der Umgebung befindlichen Hindernisse 12 ausweisen.

Im Rahmen der Erfindung existieren diverse mögliche Szenarien, wie das Bodenbearbeitungsgerät 1 ungewünschte Verhaltensweisen des Bodenbearbeitungsgerätes 1 detektieren kann, die auf bestimmte Umgebungsparameter, beispielsweise Hindernisse 12 in der Umgebung zurückzuführen sind. Ein mögliches Szenario kann beispielsweise beinhalten, dass ein einem angetriebenen Rad 11 des Bodenbearbeitungsgerätes 1 zugeordneter Odometriesensor die tatsächlichen Bewegungen des Bodenbearbeitungsgerätes 1 in der Umgebung detektiert. Sofern trotz eines Antriebs des Rades 11 eine Fortbewegung des Bodenbearbeitungsgerätes 1 innerhalb der Umgebung ausbleibt, kann auf ein Durchdrehen des Rades 11 geschlossen werden. Wenn zudem beispielsweise gleichzeitig auch ein Lagesensor eine Neigung des Bodenbearbeitungsgerätes 1 feststellt, kann insgesamt darauf geschlossen werden, dass das Bodenbearbeitungsgerät 1 beispielsweise gemäß der Situation in Figur 3 auf ein Hindernis 12 aufgefahren ist, nämlich dort auf einen Teil eines Bodenbügels eines Schwingstuhls. Der Analysealgorithmus der Auswerteeinrichtung 2 kombiniert die erkannte Situation des Bodenbearbeitungsgerätes 1 mit den Ortskoordinaten in der Umgebungskarte 3. Sofern es an dem detektierten Ort 13 einmalig oder auch mehrmalig zu diesem oder anderen Problemen kommt, definiert die Auswerteeinrichtung 2 innerhalb der Umgebungskarte 3 eine No-Go-Area 5, so dass das Bodenbearbeitungsgerät 1 diesen Ort 13 der Umgebung nicht noch mal durchfährt. Dadurch wird der Ort 13 permanent von einer Bodenbearbeitung ausgeschlossen und somit ein erneutes Havarieproblem verhindert. Alternativ kann es auch vorgesehen sein, dass der Nutzer, beispielsweise über die auf dem externen Endgerät 7 installierte Applikation, definieren kann, für welche Bodenbearbeitungen die definierten No-Go-Areas 5 angewendet werden sollen oder nicht. Insbesondere kann eine No-Go-Area 5 nur bei einer bestimmten Betriebsart des Bodenbearbeitungsgerätes 1 berücksichtigt werden, beispielsweise bei einer Bodenbearbeitung mit einer geringen Intensität, beispielsweise einem Eco-Modus. Bei einer Intensiv-Bodenbearbeitung können die No-Go-Areas 5 hingegen übergangen werden, d. h., dass das Bodenbearbeitungsgerät 1 die No-Go-Areas 5 nicht beachtet und die betreffenden Umgebungsteilbereiche trotzdem befährt. Insofern kann der Nutzer generell oder auf bestimmte Umgebungsteilbereiche die Relevanz der No-Go-Areas 5 vorgeben. Die No-Go-Areas 5 können somit nur bei bestimmten Bodenbearbeitungsmodi beachtet werden, beispielsweise nur bei Schnellreinigung, nicht jedoch bei Intensivreinigung, wobei auch Abstufungen hinsichtlich des Energieverbrauchs beispielsweise einer Antriebseinrichtung 9 des Bodenbearbeitungsgerätes 1 möglich sind. Je nach der Wahl des Nutzers kann somit ein unterschiedlicher Umgang mit den No-Go-Lines oder No-Go-Areas 5 bestimmt werden. Umgebungsteilbereiche, in denen sich das Bodenbearbeitungsgerät 1 jedoch regelmäßig festgefahren hat, können dagegen permanent und stets für alle Bodenbearbeitungsmodi als No-Go-Areas 5 Beachtung finden und somit von allen Bodenbearbeitungstätigkeiten und Fortbewegungspfaden ausgenommen sein.

Grundsätzlich empfiehlt es sich, dass die Auswerteeinrichtung 2 des Bodenbearbeitungsgerätes 1 problematische Situationen, d. h. Verhaltensparameter 4 außerhalb des Referenzverhaltensparameters 6, bereits bei einem ersten Auftreten bewertet und dann eine No-Go-Line oder No-Go-Area 5 vorschlägt. Der Vorschlag kann dem Nutzer vorzugsweise auf dem Display 16 seines externen Endgerätes 7 angezeigt werden. Insbesondere können vorgeschlagene No-Go-Areas 5 zunächst als vorläufig in der Umgebungskarte 3 markiert werden. Sofern der Nutzer dann einen permanenten Eintrag der No-Go-Area 5 in die Umgebungskarte 3 wünscht, kann er die Übernahme beispielsweise durch eine Eingabe auf dem Display 16 bestätigen. Die Applikation ermöglicht ihm darüber hinaus vorzugsweise ebenso das Löschen und Anpassen von vorgeschlagenen oder bereits gespeicherten No-Go-Areas 5. Des Weiteren kann dem Nutzer auf dem Display 16 des externen Endgerätes 7 auch eine sogenannte Heat-Map angezeigt werden, welche die Häufigkeit des Auftretens eines bestimmten Verhaltensparameters 4 entlang eines Fortbewegungspfades oder allgemein in der Umgebung anzeigt. Der Nutzer erhält somit eine Information darüber, welche Umgebungsteilbereiche der Umgebung besonders fehlerträchtig für das Bodenbearbeitungsgerät 1 sind. Sofern die Auswerteeinrichtung 2 des Bodenbearbeitungsgerätes 1 somit nicht selbsttätig eine No-Go-Area 5 setzt, kann der Nutzer dies manuell durchführen.

Eine andere Art eines ungewünschten Verhaltens des Bodenbearbeitungsgerätes 1 ist gemäß der in Figur 4 dargestellten Tabelle beispielsweise eine übermäßige Aufenthaltsdauer des Bodenbearbeitungsgerätes 1 in einem bestimmten Umgebungsteilbereich. Fährt das Bodenbearbeitungsgerät 1 beispielsweise in das Wohnzimmer 15, welches zwischen einem Sofa und Lautsprechern lediglich einen geringen hindernisfreien Bewegungsbereich für das Bodenbearbeitungsgerät 1 aufweist, kann die Bodenbearbeitungstätigkeit sehr viele Lenkbewegungen, Umkehrmanöver und/oder Doppelüberfahrungen von Umgebungsteilbereichen zur Folge haben, was erheblichen Zeit- und Energieaufwand erfordert. Durch das Messen beispielsweise der Aufenthaltsdauer des Bodenbearbeitungsgerätes 1 pro Flächeneinheit kann auf übermäßig schwierige Bodenbearbeitungsbedingungen geschlossen werden. Das erkannte Problem wird dem betreffenden Umgebungsteilbereich in der Umgebungskarte 3 zugeordnet. Sofern es in diesem Umgebungsteilbereich dann einmal oder auch mehr als einmal zu einem Problem kommt, wird dieser Umgebungsteilbereich automatisch in der Umgebungskarte 3 als No-Go-Area 5 markiert. Bei zukünftigen Fortbewegungen in der Nähe dieses Umgebungsteilbereiches meidet das Bodenbearbeitungsgerät 1 somit die definierte No-Go-Area 5, so dass diese dann von dem Nutzer manuell gereinigt werden muss. Des Weiteren können auch einzelne Betriebsmodi des Bodenbearbeitungsgerätes 1 definiert sein, bei welchen es dennoch zum Befahren des mit der No-Go-Area 5 gekennzeichneten Umgebungsteilbereichs kommt. Das Ignorieren der No-Go-Area 5 kann beispielsweise für einen Intensiv-Reinigungsmodus festgelegt sein.

Auch schmale Nischen innerhalb eines Raumes sind für ein Befahren durch das Bodenbearbeitungsgerät 1 oftmals ein Problem. Sofern das Bodenbearbeitungsgerät 1 ideal parallel zu Randkanten der Nische ausgerichtet ist, kann das Bodenbearbeitungsgerät 1 zumeist problemlos hineinfahren. Wenn das Bodenbearbeitungsgerät 1 aber einen Endbereich der Nische erreicht, ist ein gerades Zurücksetzen nur schwer möglich. Aufgrund der beengten Raumverhältnisse kann es auch nicht zu einem Manövrieren und Umkehren kommen, so dass auch solche Umgebungsteilbereiche als problembehaftet erkannt und als No-Go-Area 5 gekennzeichnet werden sollten.

Auch bedingt durch die Art eines Bodenbelages in einem Umgebungsteilbereich kann die Fortbewegung des Bodenbearbeitungsgerätes 1 erschwert sein. Beispielsweise kann sich eine Fahrgeschwindigkeit auf einem Teppichbelag mit einer relativ großen Florhöhe aufgrund des hohen Reibungswiderstandes deutlich reduzieren. Zusätzlich kann auch eine Polrichtung des Teppichbelages einen hohen Reibungswiderstand und eine Drift verursachen, so dass das Bodenbearbeitungsgerät 1 möglicherweise trotz identischem Antrieb zweier Räder 11 in eine Kurve oder Schräglinie gedrängt wird. Auch in diesen Fällen wird durch die Analyse der Fahrdaten ein Problem erkannt und korrespondierend zu den Ortsdaten des betreffenden Ortes 13 in der Umgebungskarte 3 gespeichert.

Zur Kenntlichmachung von No-Go-Areas 5 innerhalb der Umgebungskarte 3 kann die Auswerteeinrichtung 2 die Umgebungskarte 3 für den Nutzer auf dem externen Endgerät 7 besonders visualisieren. Dabei kann beispielsweise die Lage von No-Go-Lines oder No-Go-Areas 5 farblich hervorgehoben dargestellt sein. Auch kann eine Darstellung als Heat-Map sinnvoll sein, bei welcher die Häufigkeit eines Auftretens von Problemfällen oder eine in einem bestimmten Umgebungsteilbereich verbrachte Zeitspanne grafisch durch die Größe eines definierten Symbols oder eine bestimmte Farbgestaltung visualisiert wird.

### Liste der Bezugszeichen

- 1: Bodenbearbeitungsgerät
- 2: Auswerteeinrichtung
- 3: Umgebungskarte
- 4: Verhaltensparameter
- 5: No-Go-Area
- 6: Referenzverhaltensparameter
- 7: Externes Endgerät
- 8: Bodenbearbeitungselement
- 9: Antriebseinrichtung
- 10: Hindernisdetektionseinrichtung
- 11: Rad
- 12: Hindernis
- 13: Ort
- 14: Esszimmer
- 15: Wohnzimmer
- 16: Display

## Patentansprüche

1. Sich selbsttätig fortbewegendes Bodenbearbeitungsgerät (1) mit einer Auswerteeinrichtung (2), welche ausgebildet ist, das Bodenbearbeitungsgerät (1) anhand einer Umgebungskarte (3) innerhalb einer Umgebung zu navigieren und während einer Fortbewegung einen Verhaltensparameter (4) des Bodenbearbeitungsgerätes (1) und einen Fortbewegungspfad des Bodenbearbeitungsgerätes (1) zu ermitteln, wobei die Auswerteeinrichtung (2) eingerichtet ist, den Verhaltensparameter (4) und den Fortbewegungspfad zu analysieren, abhängig von dem Ergebnis der Analyse automatisch eine No-Go-Area (5), welche das Bodenbearbeitungsgerät nicht befahren darf, zu ermitteln und die ermittelte No-Go-Area (5) in die Umgebungskarte (3) einzutragen oder eine bereits in der Umgebungskarte (3) eingetragene No-Go-Area (5) zu ändern, **dadurch gekennzeichnet, dass** die Auswerteeinrichtung (2) eingerichtet ist, den Verhaltensparameter (4) mit mindestens einem definierten Referenzverhaltensparameter (6) zu vergleichen, wobei der Referenzverhaltensparameter (6) eine definierte Fortbewegungsgeschwindigkeit des Bodenbearbeitungsgerätes (1), eine definierte Drift des Bodenbearbeitungsgerätes (1), eine definierte Aufenthaltsdauer des Bodenbearbeitungsgerätes (1) pro Flächeneinheit der Umgebung, eine definierte Anzahl von Wendemanövern des Bodenbearbeitungsgerätes (1) pro definiertem Flächenteilbereich der Umgebung oder eine definierte Leistungsaufnahme einer Antriebseinrichtung (9) des Bodenbearbeitungsgerätes (1) pro Zeiteinheit ist.

2. Bodenbearbeitungsgerät (1) nach Anspruch 1, **dadurch gekennzeichnet, dass** der Referenzverhaltensparameter (6) durch einen Hersteller des Bodenbearbeitungsgerätes (1) vordefiniert ist oder manuell durch einen Nutzer des Bodenbearbeitungsgerätes (1) definierbar ist.

3. Bodenbearbeitungsgerät (1) nach Anspruch 1 oder 2, **dadurch gekennzeichnet, dass** die Auswerteeinrichtung (2) eingerichtet ist, einem Nutzer die ermittelte No-Go-Area (5) in der Umgebungskarte (3) anzuzeigen, insbesondere die ermittelte No-Go-Area (5) an ein mit dem Bodenbearbeitungsgerät (1) in Kommunikationsverbindung stehendes externes Endgerät (7) zu übermitteln.

4. Bodenbearbeitungsgerät (1) nach einem der vorhergehenden Ansprüche, **dadurch gekennzeichnet, dass** die Auswerteeinrichtung (2) eingerichtet ist, einem Nutzer die ermittelte No-Go-Area (5) vor einem Abspeichern der No-Go-Area (5) in der Umgebungskarte (3) als provisorisch gekennzeichnet anzuzeigen.

5. Bodenbearbeitungsgerät (1) nach Anspruch 4, **dadurch gekennzeichnet, dass** die Auswerteeinrichtung (2) eingerichtet ist, den Nutzer aufzufordern, das Abspeichern der No-Go-Area (5) zu bestätigen.

6. Bodenbearbeitungsgerät (1) nach einem der vorhergehenden Ansprüche, **dadurch gekennzeichnet, dass** die Auswerteeinrichtung (2) eingerichtet ist, eine No-Go-Area (5) nur zur Berücksichtigung bei einer bestimmten Betriebsart des Bodenbearbeitungsgerätes (1) zu definieren, wobei die Betriebsart insbesondere eine Bodenbearbeitung mit einer bestimmten Bearbeitungsintensität ist.

7. Bodenbearbeitungsgerät (1) nach einem der vorhergehenden Ansprüche, **dadurch gekennzeichnet, dass** die Auswerteeinrichtung (2) eingerichtet ist, einem Nutzer in der Umgebungskarte (3) eine Häufigkeit des Auftretens eines bestimmten Verhaltensparameters (4) des Bodenbearbeitungsgerätes (1) entlang des Fortbewegungspfades anzuzeigen, insbesondere die Häufigkeit in einer Heat-Map darzustellen.

8. Verfahren zum Betrieb eines sich selbsttätig fortbewegenden Bodenbearbeitungsgerätes (1), insbesondere zum Betrieb eines nach einem der vorhergehenden Ansprüche ausgebildeten Bodenbearbeitungsgerätes (1), wobei eine Auswerteeinrichtung (2) des Bodenbearbeitungsgerätes (1) das Bodenbearbeitungsgerät (1) anhand einer Umgebungskarte (3) innerhalb einer Umgebung navigiert und während einer Fortbewegung einen Verhaltensparameter (4) des Bodenbearbeitungsgerätes (1) und einen Fortbewegungspfad des Bodenbearbeitungsgerätes (1) ermittelt, wobei die Auswerteeinrichtung (2) den Verhaltensparameter (4) und den Fortbewegungspfad analysiert, abhängig von dem Ergebnis der Analyse automatisch eine No-Go-Area (5), welche das Bodenbearbeitungsgerät (1) nicht befahren darf, ermittelt und die ermittelte No-Go-Area (5) in die Umgebungskarte (3) einträgt oder eine bereits in der Umgebungskarte (3) eingetragene No-Go-Area (5) ändert, **dadurch gekennzeichnet, dass** die Auswerteeinrichtung (2) den Verhaltensparameter (4) mit mindestens einem definierten Referenzverhaltensparameter (6) vergleicht, wobei der Referenzverhaltensparameter (6) eine definierte Fortbewegungsgeschwindigkeit des Bodenbearbeitungsgerätes (1), eine definierte Drift des Bodenbearbeitungsgerätes (1), eine definierte Aufenthaltsdauer des Bodenbearbeitungsgerätes (1) pro Flächeneinheit der Umgebung, eine definierte Anzahl von Wendemanövern des Bodenbearbeitungsgerätes (1) pro definiertem Flächenteilbereich der Umgebung oder eine definierte Leistungsaufnahme einer Antriebseinrichtung (9) des Bodenbearbeitungsgerätes (1) pro Zeiteinheit ist.

## Claims

1. A self-propelled floor processing device (1) with an evaluation unit (2), which is configured to navigate the floor processing device (1) within an environment based on an area map (3), and, during a movement, to determine a behavior parameter (4) of the floor processing device (1) and a movement path of the floor processing device (1), wherein the evaluation unit (2) is set up to analyze the behavior parameter (4) and movement path, automatically determine a no-go area (5) which the floor processing device must not traverse depending on the result of the analysis, and enter the determined no-go area (5) in the area map (3) or change a no-go area (5) already entered in the area map (3), **characterized in that** the evaluation unit (2) is set up to compare the behavior parameter (4) with at least one defined reference behavior parameter (6), wherein the reference behavior parameter (6) a defined movement speed of the floor processing device (1), a defined drift of the floor processing device (1), a defined stay of the floor processing device (1) per unit area of the environment, a defined number of turning maneuvers of the floor processing device (1) per defined partial area of the environment or a defined power consumption of a drive unit (9) of the floor processing device (1) per unit time is.

2. The floor processing device (1) according to claim 1, **characterized in that** the reference behavior parameter (6) is predefined by a manufacturer of the floor processing device (1), or can be defined manually by a user of the floor processing device (1).

3. The floor processing device (1) according to claim 1 or 2, **characterized in that** the evaluation unit (2) is set up to display the determined no-go area (5) in the area map (3) to a user, especially to transmit the determined no-go area (5) to an external terminal (7) that communicates with the floor processing device (1).

4. The floor processing device (1) according to one of the preceding claims, **characterized in that** the evaluation unit (2) is set up to display the determined no-go area (5) to a user as provisionally marked before the no-go area (5) is stored in the area map (3).

5. The floor processing device (1) according to claim 4, **characterized in that** the evaluation unit (2) is set up to prompt the user to confirm storage of the no-go area (5).

6. The floor processing device (1) according to one of the preceding claims, **characterized in that** the evaluation unit (2) is set up to define a no-go area (5) only for consideration during a specific operating mode of the floor processing device (1), wherein the operating mode especially involves processing a floor with a specific processing intensity.

7. The floor processing device (1) according to one of the preceding claims, **characterized in that** the evaluation unit (2) is set up to display to a user in the area map (3) a frequency with which a specific behavior parameter (4) of the floor processing device (1) arises along the movement path, especially display the frequency in a heat map.

8. A method for operating a self-propelled floor processing device (1), especially for operating a floor processing device (1) configured according to one of the preceding claims, wherein an evaluation unit (2) of the floor processing device (1) navigates the floor processing device (1) within an environment based on an area map (3), and, during a movement, determines a behavior parameter (4) of the floor processing device (1) and a movement path of the floor processing device (1), wherein the evaluation unit (2) analyzes the behavior parameter (4) and the movement path, automatically determines a no-go area (5) which the floor processing device (1) must not traverse depending on the result of the analysis, and enters the determined no-go area (5) in the area map (3) or changes a no-go area (5) already entered in the area map (3), **characterized in that** the evaluation unit (2) compares the behavior parameter (4) with at least one defined reference behavior parameter (6), wherein the reference behavior parameter (6) a defined movement speed of the floor processing device (1), a defined drift of the floor processing device (1), a defined stay of the floor processing device (1) per unit area of the environment, a defined number of turning maneuvers of the floor processing device (1) per defined partial area of the environment or a defined power consumption of a drive unit (9) of the floor processing device (1) per unit time is.

## Revendications

1. Appareil de travail du sol (1) se déplaçant automatiquement avec un dispositif d'analyse (2), qui est conçu pour naviguer l'appareil de travail du sol (1) à l'intérieur d'un environnement à l'aide d'une carte d'environnement (3) et pour déterminer pendant un déplacement un paramètre de comportement (4) de l'appareil de travail du sol (1) et un chemin de déplacement de l'appareil de travail du sol (1), le dispositif d'évaluation (2) étant conçu pour analyser le paramètre de comportement (4) et le trajet de déplacement, pour déterminer automatiquement, en fonction du résultat de l'analyse, une zone d'interdiction (5) dans laquelle l'outil de travail du sol ne doit pas circuler, et pour inscrire la zone d'interdiction (5) déterminée sur la carte des environs (3) ou pour modifier une zone d'interdiction (5) déjà inscrite sur la carte des environs (3), **caractérisé en ce que** le dispositif d'évaluation (2) est conçu pour comparer le paramètre de comportement (4) avec au moins un paramètre de comportement de référence (6) défini, le paramètre de comportement de référence (6) étant une vitesse de déplacement définie de l'outil de travail du sol (1), une dérive définie de l'outil de travail du sol (1), est une durée de séjour définie de l'appareil de travail du sol (1) par unité de surface de l'environnement, un nombre défini de manoeuvres de retournement de l'appareil de travail du sol (1) par zone partielle définie de la surface de l'environnement ou une puissance absorbée définie d'un dispositif d'entraînement (9) de l'appareil de travail du sol (1) par unité de temps.

2. Appareil de travail du sol (1) selon la revendication 1, **caractérisé en ce que** le paramètre de comportement de référence (6) est prédéfini par un fabricant de l'appareil de travail du sol (1) ou peut être défini manuellement par un utilisateur de l'appareil de travail du sol (1).

3. Appareil de travail du sol (1) selon la revendication 1 ou 2, **caractérisé en ce que** le dispositif d'évaluation (2) est conçu pour indiquer à un utilisateur la zone no-go (5) déterminée sur la carte des environs (3), en particulier pour transmettre la zone no-go (5) déterminée à un terminal externe (7) en liaison de communication avec l'appareil de travail du sol (1).

4. Appareil de travail du sol (1) selon l'une des revendications précédentes, **caractérisé en ce que** le dispositif d'évaluation (2) est conçu pour indiquer à un utilisateur la zone no-go (5) déterminée comme étant marquée provisoirement avant une mémorisation de la zone no-go (5) dans la carte des environs (3).

5. Outil de travail du sol (1) selon la revendication 4, **caractérisé en ce que** le dispositif d'évaluation (2) est agencé pour demander à l'utilisateur de confirmer la mémorisation de la No-Go-Area (5).

6. Appareil de travail du sol (1) selon l'une des revendications précédentes, **caractérisé en ce que** le dispositif d'évaluation (2) est agencé pour définir une No-Go-Area (5) uniquement pour la prise en compte dans un mode de fonctionnement déterminé de l'appareil de travail du sol (1), le mode de fonctionnement étant notamment un travail du sol avec une intensité de travail déterminée.

7. Appareil de travail du sol (1) selon l'une des revendications précédentes, **caractérisé en ce que** le dispositif d'évaluation (2) est conçu pour indiquer à un utilisateur, dans la carte des environs (3), une fréquence d'apparition d'un paramètre de comportement (4) déterminé de l'appareil de travail du sol (1) le long du chemin de déplacement, en particulier pour représenter la fréquence dans une carte de chaleur.

8. Procédé pour faire fonctionner un appareil de travail du sol (1) se déplaçant automatiquement, en particulier pour faire fonctionner un appareil de travail du sol (1) réalisé selon l'une des revendications précédentes, dans lequel un dispositif d'analyse (2) de l'appareil de travail du sol (1) fait naviguer l'appareil de travail du sol (1) à l'intérieur d'un environnement à l'aide d'une carte d'environnement (3) et détermine pendant un déplacement un paramètre de comportement (4) de l'appareil de travail du sol (1) et un chemin de déplacement de l'appareil de travail du sol (1), le dispositif d'évaluation (2) analyse le paramètre de comportement (4) et le chemin de déplacement, et en fonction du résultat de l'analyse, détermine automatiquement une zone interdite (5) dans laquelle l'outil de travail du sol (1) ne doit pas se déplacer, et inscrit la No-Go-Area (5) déterminée sur la carte des environs (3) ou modifie une No-Go-Area (5) déjà inscrite sur la carte des environs (3), **caractérisé en ce que** le dispositif d'évaluation (2) compare le paramètre de comportement (4) à au moins un paramètre de comportement de référence (6) défini, le paramètre de comportement de référence (6) étant une vitesse de déplacement définie de l'appareil de travail du sol (1), est une dérive définie de l'appareil de travail du sol (1), une durée de séjour définie de l'appareil de travail du sol (1) par unité de surface de l'environnement, un nombre défini de manoeuvres de retournement de l'appareil de travail du sol (1) par zone partielle définie de la surface de l'environnement ou une puissance absorbée définie d'un dispositif d'entraînement (9) de l'appareil de travail du sol (1) par unité de temps.
